# EUROPEAN PATENT SPECIFICATION

(11) **EP 2 679 087 B1**
(45) Date of publication and mention of the grant of the patent: **29.11.2017**
(21) Application number: 12749778.2
(22) Date of filing: 17.02.2012
(51) Int. Cl.: A01F 29/00, A01K 5/00, B01F 13/10, B02C 18/06

(54) **DEVICE FOR MINCING AND MIXING VEGETABLE PRODUCTS**
VORRICHTUNG ZUM ZERKLEINERN UND MISCHEN VON GEMÜSEPRODUKTEN
DISPOSITIF POUR LE HACHAGE ET LE MÉLANGE DE PRODUITS VÉGÉTAUX

(30) Priority: 21.02.2011 ES 201131523; 21.09.2011 ES 201100183
(43) Date of publication of application: 01.01.2014
(73) Proprietor: Talleres Martinez Gutierrez, S.L.U., 46940 Manises, Valencia (ES)
(72) Inventor: MARTINEZ MARIN, Antonio, 46940 Manises, Valencia (ES)
(86) International application number: PCT/ES2012/070091
(87) International publication number: WO 2012/113950

(56) References cited:
- EP-A1- 1 082 895
- EP-A1- 1 982 585
- EP-A2- 0 432 702
- FR-A1- 2 662 573
- US-A- 3 966 128
- US-A- 5 215 268
- US-A- 5 803 375
- US-A- 5 803 375
- US-A- 6 029 919
- US-A1- 2009 016 155
- US-A1- 2009 016 155

## Description

### Purpose of the invention

As established in its title, this invention is a device for mincing, or finely cutting, and mixing vegetable products, combining both functions in a single unit to give a thinner product ready for use in a single process and with significant energy savings.

The fine cutting or mincing is for animal feed products such as hay, alfalfa, straw or similar, or the mincing of substrates in biogas plants.

This invention is applicable to the stockbreeding feed sector, as a current trend involves giving livestock feed that is as small as possible for easier digestion and better use, and to the biogas plant feed sector where the incorporation of smaller elements allows for faster degradation of this substrate by the digesters (bacteria), leading to more efficient production.

### Invention background

Existing mincing mixing carts used in animal feed are effective for product cutting sizes of around 5 cm, but must be used for a long time if a smaller mix of products is required, thus leading to significant energy consumption.

There are also other disadvantages to the current mincing systems, such as machinery wear (augers, hoppers, blades, gear faults, etc.) and the maintenance costs this entails.

One alternative for obtaining the required size would consist of mincing long materials in independent mincing machines and then adding them to the mixing carts, leading to high costs in machinery and complex adaptation due to the wide variety of products placed in the machines (straw, vegetables, carrots, beet, corn cane, etc.) and their sensitivity to impurities (stones, soil, etc.).

The large mixing and mincing carts with a vertical system for animal feed products and biogas plants are also well known. These carts work with a high pressure on the augers, preventing the products from being correctly mixed and consuming a large amount of energy. They also generate expensive wear on their internal parts.

The weight of the product mixture itself means that the pressure on the augers prevents them from mixing correctly and from obtaining the required uniformity with moderate energy consumption.

One alternative for reducing wear on the augers and decreasing the power consumed during the mincing and mixing process consists of reducing the size of the augers, which leads to an increase in the time required to mince and mix the materials and offers minimal improvement.

Another alternative to consider is the preparation of lower capacity mixtures, with the disadvantages of excess movements (in the case of distribution carts) and high labour costs due to the fact that a larger quantity of mixtures must be prepared (in the case of plants for feeding biogas digesters).
US5803375 discloses a device with the features of the preamble of claim 1.
The applicant of this invention is unaware of the existence of prior issues that satisfactorily solve the problems explained.

### Invention description

The device according to claim 1 includes features aimed at performing the fine mincing and cutting and mixing functions at the same time to give mincing or cutting sizes of less than 1 centimetre, where cutting discs can turn at a higher speed and be subject to minimal damage.

Another objective of the invention is to solve the problems of excess time and energy to obtain the chopped and mixed product, as well as the costs produced.

Another objective of the invention is to produce a mixing - mincing device for large product volumes, preserving the advantages of the fast mix preparation with lower energy consumption.

According to the invention, the device for mincing and mixing vegetable products includes:
- A mixing cavity or hopper with an auger that rotates at low revs, the purpose of which is to mix the products and to ensure they circulate to enter a mincing and cutting cavity.
- A mincing and cutting cavity with a shaft that rotates at high speeds and on which a series of cutting discs are mounted.
- A separating part in the area where both cavities - the mixing cavity or hopper and the cutting or mixing cavity - touch.

A separating part may be formed by slots, combs, counter-blades or any similar item that allows for the penetration of the cutting discs on the mincing shaft and ensures only thin product is allowed to enter.

The machine operates as described below. Once the product to be chopped has been placed in the mixing hopper or cavity, the mixture is made to circulate around the mincing or cutting area, which is where the cutting blades come into action and cut the material, allowing for the chopped material to enter and be sliced down to sizes of less than 1 cm.

Due to the fact that the cutting discs do not come into direct contact with the mixture as a whole but only with its ends, this means that the mincing or cutting discs can rotate at a higher speed. Furthermore, the speed of rotation of the mincing or cutting discs is greater than that of the mixing auger, the former rotating at a proportion of 20 to 40 times faster than the latter.

Also due to the way in which the cutting takes place, any stones or other undesired objects are easily expelled, as the mincing or cutting discs have enough space to expel them when they are hit by them.

Once the material has been chopped and has crossed the separating part, it falls into the chopped or sliced material cavity by gravity and is returned to the mixing cavity or hopper through the lower mincing shaft disc, which is a turbine-type puling disc, or any other form of extraction.

For this lower disc to return the chopped material to the mixing cavity or hopper, it has a turbine-type configuration that expels the material into the hopper through a slot or other impelling element.

The maximum saving of energy is obtained once the mixture is chopped, with the tractor at low revs and moving the mixture while the innovated thin cutting device reduces it it to the required size.

The device described leads to a saving of energy because the cutting or mincing blades are able to rotate with less effort, products chopped to a size of less than 1 cm, higher rotation speed of the mincing or cutting shaft and less exposure to damage to the mincing or cutting discs, as any stones or objects are easily expelled. All of these are achieved with the features essentially included in the first claim.

Another advantage of this device is that it is applied to mixing carts with lodging turbine, which reduces the size of the straw, which means that it is possible to increase its quantity in the hopper.

The cutting and mincing device can be incorporated into feeding circuits in biogas plants with co-digestion systems. It can also be incorporated into carts for the feeding of biogas plants. Alternatively, one or several pulled, static or self-propelled system augers can be incorporated into the carts.

On producing the mincing-mixing device, which is especially recommended for large product volumes, this device has certain technical singularities to perform three different functions: on one hand, the graduated passing of products from one cavity to another and, on the other, the mixing and mincing function of the products in a shorter time than if using conventional large-volume mixing and mincing devices and lastly, the increased capacity of the device. All of this with a significant saving of energy and a reduction in pressure and faults on the augers and other parts.

In this device for large product volumes, the hopper includes:
- an upper storage cavity for product to be chopped and mixed,
- a lower mincing and mixing cavity in which the low-speed augers are housed that are responsible for mincing and mixing the product.
- a separating surface between the upper and lower cavity, which is fitted with at least one product port to the lower cavity and one or several regulating gates for the product to pass to the lower cavity,
- rotating entraining arms that move the product contained in the upper cavity towards the ports fitted with regulating gates,
- and at least one gate to empty out the mixture prepared in the lower cavity.

Hence, the product to be mixed and chopped does not hit the rotating augers directly but instead they perform their work on a certain quantity of product that has passed from the upper cavity to the lower cavity. A lower power is therefore required to turn the augers, with the consequent saving of energy and the reduction in pressures on these augers and other parts of the hopper.

In one version, the entraining arms are fixed to the upper part of the augers - more specifically on the end of their shaft, for simultaneous rotation. In an alternative version, these entraining arms are connected to an independent drive motor.

In a preferred version, the device includes a thin cutting unit and a resend tube in the lower cavity that, depending on its orientation, returns the thinly chopped product to the upper cavity to repeat the process or sends it outside the device.

This thin mincing unit means that the product can be chopped in very small portions, which is ideal for use in a biogas plant.

The tube resending the thinly chopped product from the lower cavity to the upper cavity means that the product being processed can recirculate. This resending is possible in different ways, e.g. using the interior elevator auger, a cyclone or other mechanism.

Hence, the device on the version specified for use with large product volumes operates as described below: Once the device has been started, it is loaded at the top while the products are incorporated into the lower cavity through the separating sheet gate. Once the lower part is full, the gate is closed and the upper part is filled with product. In the lower cavity, the augers thinly cut, mince and feed a thin mincing device, where the chopper-mixer is fitted with this thin mincing device, until the mixture is even. At the same time, the gate passing the product from the upper to the lower cavity can be used in two different ways:
- gradually, so that the product is introduced gradually from the upper cavity to the lower cavity while the mixture is moved out or resent to the upper cavity as it is homogenised.
- instantly, once the mixture has been homogenised in the lower cavity it is moved out through the emptying hole. The gates are then opened until the lower cavity is filled once again.

Hence, the device can prepare a certain mixture (same products and proportions) of products in both cavities. As the lower cavity chops and homogenises all of the products, these are extracted through the resend tube in the same volume as that of the products passed from the upper to the lower cavity, the latter always remaining at the same capacity.

In one version, the device includes certain measurements that means it can be used as a distributing cart for use either as a feeder in a biogas plant or to feed livestock. In the case of the latter, the device can be built for both vertical and horizontal systems.

### Description of the figures.

To complete this description and to provide a better understanding of the characteristics of the invention, a set of diagrams are attached to this descriptive report to represent the following in an illustrative yet unlimited manner:
- Figure 1 shows a side view of an example of the device for mincing and mixing vegetable products according to the invention, equipped with a mixing hopper.
- Figure 2 shows two possible versions of the mincing and cutting discs.
- Figure 3 shows a schematic ground view of the device from Figure 1, where the mixing and mincing cavities or hinge-activated inter-articulated cutting cavities.
- Figure 4 is a cross-section view of a cart with a horizontal system and three augers, which is fitted with two mincing units.
- Figure 5 shows an overhead view of an example of the device equipped with a static trailer with three vertical augers and four cutting and mincing cavities, especially applied in biogas plants.
- Figure 6 shows a similar view to the previous figure, in which the device is fitted with gates.
- Figure 7 shows an example of the lower entraining disc.
- Figure 8 shows a sectioned profile view of a version of the invention, in this case equipped with: a hopper with an upper cavity and a lower cavity, a thin mincing unit and a resend tube for the chopped product.
- Figure 9 shows a ground-view close-up of the separating surface between the upper and lower cavities of the device in Figure 8.
- Figure 10 shows a ground view of the lower cavity.
- Figure 11 shows a perspective close-up of an entraining arms attached to the upper end of the shaft of an auger.

### Preferential version of the invention

In view of these figures, a preferential version of the invention is explained below, although this is in no way limitative.

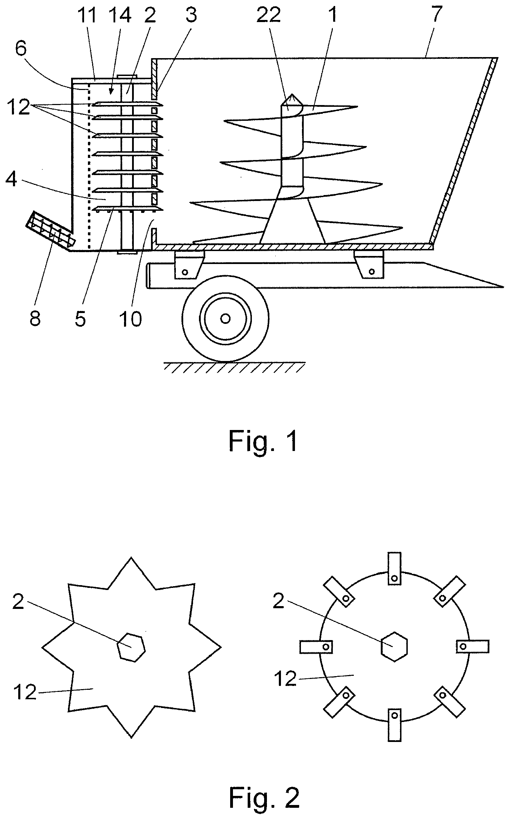

Figure 1 shows that the device for mincing and mixing includes a

The mixing hopper (7) is fitted with an auger (1) that rotates at a very low speed and circulates the product mixture so that it comes into contact with the cutting areas and this mixture can be minced appropriately.

The cutting or mincing cavity (11) connected to the hopper (7) by means of a separating part (3) houses a cutting and mincing unit (14) that is fitted with a shaft (2) on which several cutting discs (12) are mounted with various gaps (4) and that penetrate the hopper (7) through slots in the separating part (3). Several emptying ports are associated to this cutting or mincing cavity (11).

In one version, these emptying ports in the cutting or mincing cavity (11) include an entraining disc (5) mounted on the shaft (2) driving the cutting discs (12) that includes vertical blades or plates (15). The rotating of this entraining disc (5) causes the minced mixture to return to the mixing hopper (7) through a slot (10).

Alternatively, if the mixture is already of the required size and is to be stored, it can be extracted through a screen (6) and then transported outside by means of a conveyor part (8) constituted by an auger or entraining chain. The mixture is easily reduced in size and homogenised and unnecessary friction is avoided.

Figure 2 shows two examples of the cutting discs (12) that could be used in the thin cutting or mincing unit (14). These cutting discs (12) are fitted to one or several shafts (2) and could be for cutting or prepared for the installation of blades or hammers, depending on the mixtures to be most frequently produced. The blades on the cutting discs (12) can be easily replaced with hammers as they are attached by screws, as can be seen in one of the examples in Figure 2.

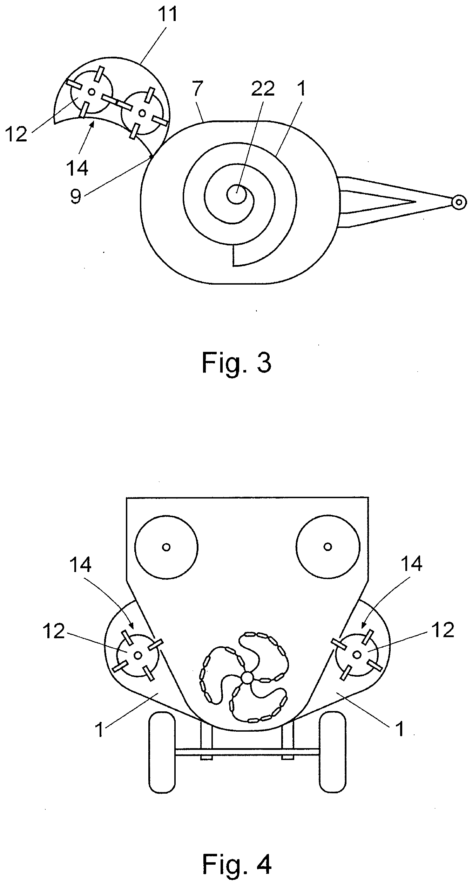

Figure 3 shows the cutting unit (14) attached to the hopper (7) by a hinge (9) to allow easy access to the cutting discs (12).

These blades or hammers on the cutting discs (12) operate at between 400 and 1000 rpm. and can be driven by electric or hydraulic motors or by the rotating transmission of parts of the cart itself.

Figure 4 shows a cross-section view of a cart with three horizontal augers and two cutting and mincing units (14).

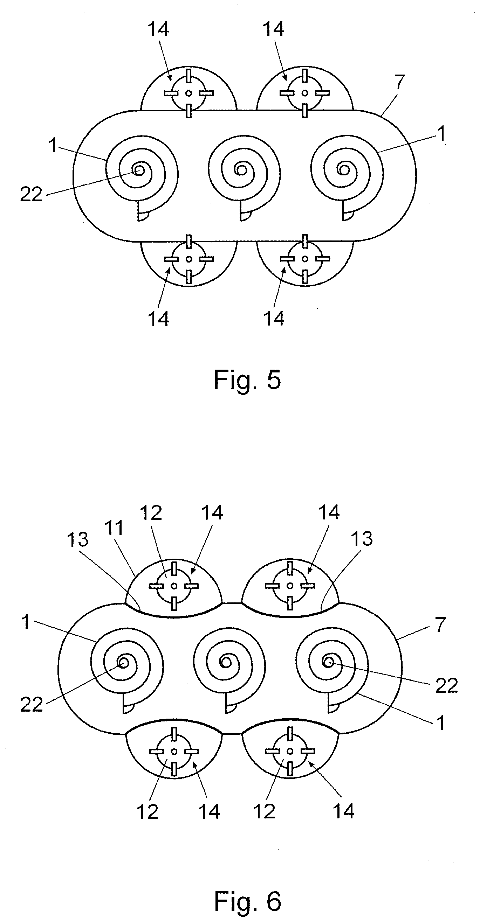

Figure 5 is the overhead view of a static trailer with three vertical augers for biogas plants, with four thin cutting and mincing units (14). Figure 6 shows the same situation but with the incorporation of gates (13) on the cutting units (14) so that it is possible to decide whether or not this system is to be used.

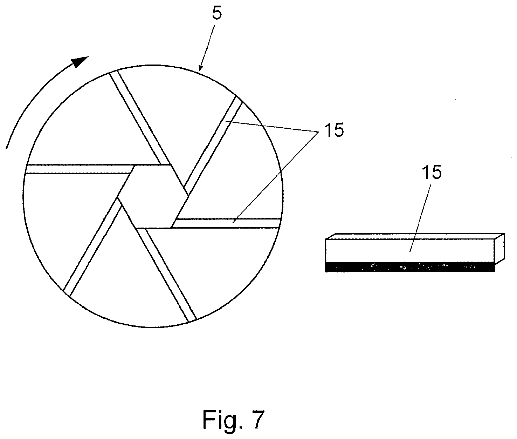

Figure 7 shows the lower entraining disc (5), which is a turbine-type disc with a series of vertical plates (15) welded together at the edge.

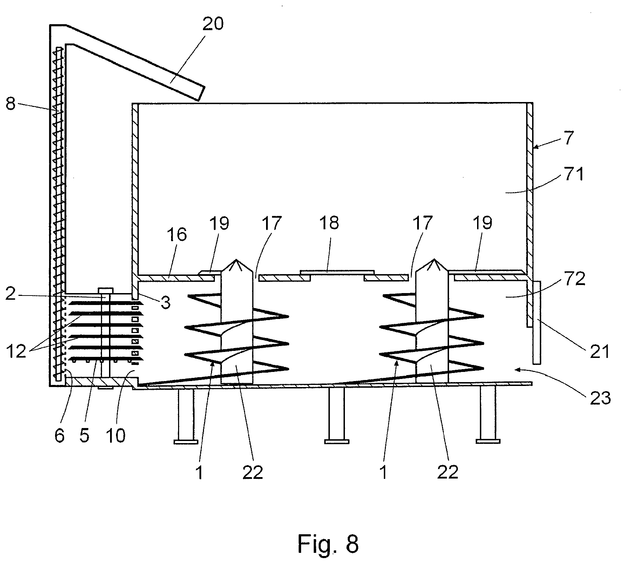

Figure 8 shows a version of the mixing-mincing device adapted for large product volumes in which the hopper (7) is divided by a separating surface (16) into an upper cavity (71) for product storage and a lower cavity (72).

This separating (16) has at least one product port to the lower cavity (72) and one or several regulating gates (18) for the product to pass through this port.

The shafts (22) on the augers (1) located in the lower cavity (72) are fitted vertically, facing several holes (17) made in the separating surface (16). The minced and mixed product can be extracted through the gate (21).

The augers (1) make the product circulate through the lower cavity (72) and the cutting discs (12) pass it through the separating part (3) to the resend tube (20) that, depending on its orientation, returns the minced products to the upper cavity (71) to repeat the process or sends it out of the device.

Each of these augers (1) includes entraining arms (19) attached to the top of the shaft (2) of these augers (1). These entraining arms (19) are above the separating surface (16) are rotate at the same speed as the augers (1) to ensure the product stored in the upper cavity (71) is entrained and dropped through the port in the regulating gate (18).

The lower cavity (72) includes a decanting area (23) for stones and large objects that are extracted from the device through a gate (21). This gate (21) normally opens by 15 to 20 centimetres to expel the stones and, where required, can be opened fully to completely empty the lower cavity.

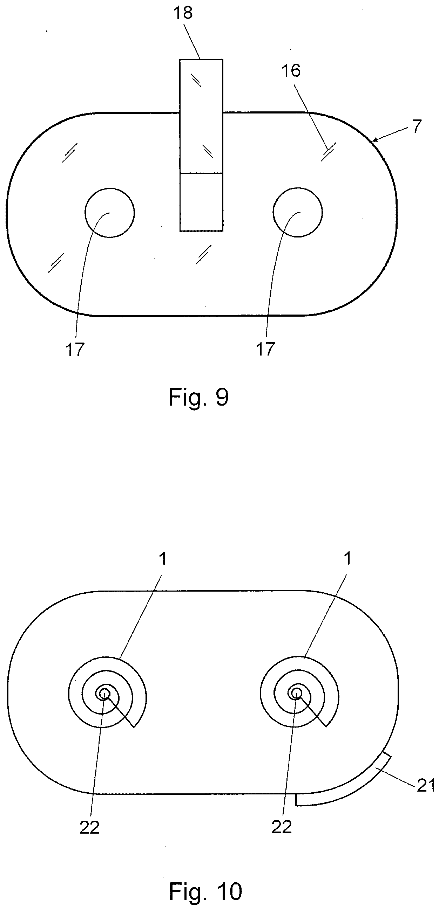

Figure 9 shows the separating surface (16) with the holes (17), which are larger than the shaft (22) of the augers and the port in the regulating gate (18). All of these parts ensure the product passes from the upper cavity (71) to the lower cavity (72) of the device.

Figure 10 shows the augers (1) and the gate (21) that allows for the extraction of waste (stones and large objects) accumulated in the decanting area (23) and the extraction of the minced product from the lower cavity (72).

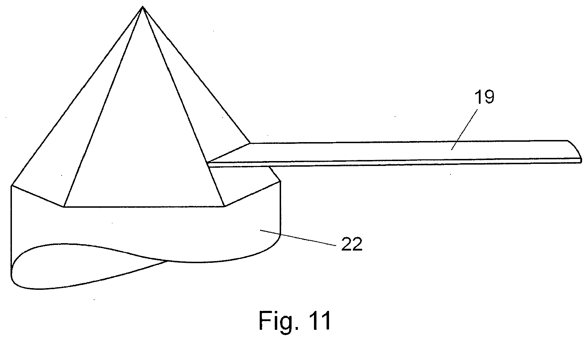

Figure 11 shows the entraining arm (19) attached to the top of the shaft (22) of an auger, used to push the products towards the regulating gate (18) connecting the upper cavity (71) and the lower cavity (72).

Variations in materials, shape, size and layout of the components, described in an unlimited manner, do not alter the essence of this invention, as delimited by the claims, which is sufficient for its reproduction by an expert.

## Claims

1. Device for mincing and mixing vegetable products, comprising:
- a mixing cavity or hopper (7) with at least one auger (1) that rotates at low revolutions.
- a cutting and mincing cavity (11) attached to the hopper (7) with a mincing or cutting shaft (2) that turns at high speed and on which a series of cutting discs (12) and an entraining disc (5) for the minced product are mounted,
- a separating part (3) in the area of contact between the mixing hopper (7) and the cutting or mincing cavity (11),
- means for emptying the cut or minced mixture from inside the cutting or mincing cavity (11);
**characterised by**:
- the separating part (3) comprises some slots, combs, counter-blades, gates or any similar part that allows for the penetration of the cutting discs (12) on the shaft (2) and ensures only thin product is allowed to enter.
- the means of emptying the mincing or cutting cavity (11) consist of an entraining disc (5) fitted to the bottom of the cutting or mincing shaft (2) with a configuration forming the blades (15) of an expulsion turbine.

2. Device, according to Claim 1, **characterised by** the means of emptying the mincing or cutting cavity (11) that consist of a screen (6) and an auger or entrainment chain-type conveyor (8).

3. Device, according to Claim 1, **characterised by** the means of emptying the mincing or cutting cavity (11) that consist of a slot (10) for the return of the minced mixture to the hopper (7).

4. Device, according to Claim 1, **characterised by** the mincing or cutting shaft (2) and the conveyor (8) that are driven by electric or hydraulic motors or by combustion or transmission of rotating parts.

5. Device, according to Claim 1, **characterised by** the fact that the hopper (7) includes:
- an upper storage cavity (71) for products to be minced and mixed, a lower mincing and mixing cavity (72) with at least one auger (1) that rotates at low revolutions,
- a separating surface (16) between the upper cavity (71) and the lower cavity (72), which is fitted with at least one product port to the lower cavity (72) and one or several regulating gates (18) for the product to pass to the lower cavity (72);
- rotating entraining arms (19) that move the product contained in the upper cavity towards the ports fitted with regulating gates (18),
- at least one gate (21) for the extraction of stones and large objects and/or emptying of the lower cavity (72).

6. Device, according to Claim 5, **characterised by** the fact that the entraining arms (19) are attached to the top of the shafts (22) of the rotating augers (1).

7. Device, according to Claim 5, **characterised by** the entraining arms (19) that are connected to an independent drive motor

8. Device, according to Claim 5, **characterised by** the fact that the lower cavity (72) includes a decanting area (23) for stones and large objects that are extracted from the device.

9. Device, according to claims 5 to 8, **characterised by** the hopper (7) that is fitted with a return tube (20) to send the thin product from the lower cavity (72) back to the upper cavity (71).

10. Device, according to any of the above claims, **characterised by** the fact that it includes distributor cart-type means of movement.

## Patentansprüche

1. Vorrichtung zum Zerkleinern und Mischen von pflanzlichen Erzeugnissen mit:
- einer Mischvertiefung oder einem Trichter (7) mit mindestens einer Einzugwalze (1), die sich mit geringer Geschwindigkeit dreht,
- einer Schneid- und Zerkleinerungsvertiefung (11), die an dem Trichter (7) befestigt ist, mit einem Schneid- oder Zerkleinerungsschaft (2), der sich mit schneller Geschwindigkeit dreht und an dem eine Reihe von Schneidscheiben (12) und eine Verladescheibe (5) für das zerkleinerte Produkt montiert sind,
- ein Trennteil (3) im Kontaktbereich zwischen dem Mischfilter (7) und der Schneid- oder Zerkleinerungsvertiefung (11),
- mittel zum Ausleeren der geschnittenen oder zerkleinerten Mischung aus der Schneid- oder Zerkleinerungsvertiefung (11);
die sich **dadurch kennzeichnet, dass**:
- das Trennteil (3) mehrere Schlitze, Kämme, Vorschneidemesser, Klappen oder ähnliche Teile aufweist, die das Durchdringen der Schneidscheiben (12) an dem Schaft (2) ermöglichst, so dass nur feine Produkte eintreten können.
- die Mittel zum Ausleeren der Schneid- und Zerkleinerungsvertiefung (11) aus einer Verladescheibe (5) bestehen, die so an der Unterseite der Schneid- oder Zerkleinerungsschäfte (2) befestigt sind, dass die Messer (15) eine Auswerfturbine bilden.

2. Vorrichtung nach Anspruch 1, die sich durch die Mittel zum Ausleeren der Zerkleinerungs- und Schneidvertiefung (11) auszeichnet, die aus einer Blende (6) und einer Einzugswalze oder einem Verladekettenförderer (8) bestehen.

3. Vorrichtung nach Anspruch 1, die sich durch die Mittel zum Ausleeren der Zerkleinerungs- oder Schneidvertiefung (11) auszeichnet, die aus einem Schlitz (10) zur Rückführung der zerkleinerten Mischung an den Trichter (7) besteht.

4. Vorrichtung nach Anspruch 1, die sich dadurch auszeichnet, dass der Zerkleinerungs- oder Schneidschaft (2) und der Förderer (8) durch elektrische oder Hydraulikmotoren oder durch die Verbrennung oder Übertragung von drehenden Teilen angetrieben werden.

5. Vorrichtung nach Anspruch 1, die sich dadurch auszeichnet, dass der Filter (7) folgende Elemente umfasst:
- eine obere Aufbewahrungsvertiefung (71) für Erzeugnisse, die zerkleinert und gemischt werden sollen, eine untere Zerkleinerungs- und Mischvertiefung (72) mit mindestens einer Einzugwalze (1), die sich mit geringer Geschwindigkeit dreht,
- eine Trennfläche (16) zwischen der oberen Vertiefung (71) und der unteren Vertiefung (72), die mit mindestens einem Produktanschluss an die untere Vertiefung
- (72) oder einer oder mehreren Regulierklappen (18) zum Passieren des Produktes zur unteren Vertiefung (72) ausgestattet ist;
- drehenden Verladearmen (19), die das in der oberen Vertiefung enthaltene Produkt zu den Anschlüssen bewegen, die mit Regulierklappen (18) ausgestattet sind;
- mindestens einer Klappe (21) zum Entnehmen von Steinen und großen Objekten und/oder Entleeren der unteren Vertiefung (72).

6. Vorrichtung nach Anspruch 5, die sich dadurch auszeichnet, dass die Verladearme (19) an der Oberseite der Schäfte (22) der Drehwalzen (1) befestigt sind.

7. Vorrichtung nach Anspruch 5, die sich dadurch auszeichnet, dass die Verladearme (19) mit einem eigenständigen Antriebsmotor verbunden sind.

8. Vorrichtung nach Anspruch 5, die sich dadurch auszeichnet, dass die untere Vertiefung (72) einen Ausschüttbereich (23) für die Steine und großen Objekte umfasst, die aus der Vorrichtung entnommen werden.

9. Vorrichtung nach Anspruch 5 bis 8, die sich dadurch auszeichnet, dass der Filter (7) mit einem Rückflussrohr (20) zum Rücksenden des feinen Produktes von der unteren Vertiefung (72) an die obere Vertiefung (71) ausgestattet ist.

10. Vorrichtung nach **einem** der obigen Ansprüche, die sich dadurch auszeichnet, dass sie einen Verteilerwagen zum Bewegen aufweist.

## Revendications

1. Dispositif pour le hachage et le mélange de produits végétaux, comprenant :
- une cavité de mélange ou trémie (7) avec au moins une vis sans fin (1) qui tourne à bas régime ;
- une cavité de hachage et de mélange (11) rattachée à la trémie (7) avec un arbre de hachage ou de découpe (2) qui tourne à grande vitesse et sur lequel sont montés une série de disques de découpe (12) et un disque d'entraînement (5) pour les produits hachés ;
- une pièce de séparation (3) dans la zone de contact entre la trémie de mélange (7) et la cavité de hachage ou de mélange (11) ;
- des moyens de vidage du hachis de la cavité de hachage ou de découpe (11) ;
**caractérisé par** :
- la pièce de séparation (3) comprend certaines fentes, peignes, contre-lames, portes ou similaires qui permettent la pénétration des disques de coupe (12) sur l'arbre (2) et garantit que seul un produit assez fin peut entrer ;
- les moyens de vidage de la cavité de hachage ou de découpe (11) consistent en un disque d'entraînement (5) monté au fond de l'arbre de hachage ou de découpe (2) avec une configuration formant les lames (15) d'une turbine d'expulsion.

2. -Dispositif, conformément à la Revendication 1, **caractérisé par** les moyens de vidage de la cavité de hachage ou de découpe (11) qui consiste en un tamis (6) et un convoyeur de type à chaînes ou à vis sans fin (8).

3. - Dispositif, conformément à la Revendication 1, **caractérisé par** les moyens de vidage de la cavité de hachage ou de découpe (11) qui consiste en une fente (10) pour le retour du hachis vers la trémie (7).

4. - Dispositif, conformément à la Revendication 1, **caractérisé par** l'arbre de hachage ou de découpe (2) et le convoyeur (8) entraînés par des moteurs électriques ou hydrauliques ou par combustion ou transmission sur les pièces en rotation.

5. - Dispositif, conformément à la Revendication 1, **caractérisé par le fait que** la trémie (7) comprend :
- une cavité de stockage supérieure (71) pour recevoir les produits à hacher et à mélanger, une cavité de hachage et de mélange inférieure (72) avec au moins une vis sans fin (1) qui tourne à faible régime ;
- une surface de séparation (16) entre la cavité supérieure (71) et la cavité inférieure (72), qui est montée avec au moins un orifice pour le produit à la cavité inférieure (72) et une ou plusieurs portes de régulation (18) du passage de produit dans la cavité inférieure (72) ;
- les bras d'entraînement en rotation (19) qui remuent le produit contenu dans la cavité supérieure vers les orifices disposés sur les portes de régulation (18) ;
- au moins une porte (21) pour le retrait des pierres et des objets de grande taille et/ou le vidage de la cavité inférieure (72).

6. - Dispositif, conformément à la Revendication 5, **caractérisé par le fait que** les bras d'entrainement (19) sont attachés aux arbres (22) des vis sans fin en rotation (1).

7. - Dispositif, conformément à la Revendication 5, **caractérisé par** les bras d'entraînement (19) qui *sont* connecté à un moteur d'entraînement indépendant.

8. - Dispositif, conformément à la Revendication 5, **caractérisé par le fait que** la cavité inférieure (72) comprend une zone de décantation (23) pour les pierres et objets de grande taille retirés du dispositif.

9. - Dispositif, conformément aux Revendications 5 à 8, **caractérisé par** la trémie (7) qui est équipé d'un tube de retour (20) qui renvoie le produit fin de la cavité inférieure (72) vers la cavité supérieure (71).

10. - Dispositif, conformément à l'une **quelconque** des revendications ci-dessus, **caractérisé par le fait qu'**il comporte des moyens de déplacement de type chariot distributeur.
